# EUROPÄISCHE PATENTSCHRIFT

(11) **EP 0 622 578 B1**
(45) Veröffentlichungstag und Bekanntmachung des Hinweises auf die Patenterteilung: **22.01.1997**
(21) Anmeldenummer: 94105430.6
(22) Anmeldetag: 08.04.1994
(51) Int. Cl.: F16L 37/22

(54) **Schnellverschlusskupplung**
Quick acting coupling
Raccord rapide

(30) Priorität: 10.04.1993 DE 4311879; 26.11.1993 DE 4340321
(43) Veröffentlichungstag der Anmeldung: 02.11.1994
(73) Patentinhaber: CARL KURT WALTHER GmbH & Co. KG, D-42327 Wuppertal (DE)
(72) Erfinder: Kaul, Wolfgang, Dr., D-42369 Wuppertal (DE); Ricken, Norbert, D-44797 Bochum (DE)
(74) Vertreter: Rieder, Hans-Joachim, Dr.

(56) Entgegenhaltungen:
- DE-B- 1 228 470

## Beschreibung

Die Erfindung bezieht sich auf eine Schnellverschlußkupplung, bestehend aus zwei in dichtenden Sitz zueinander bringbaren Kupplungshälften, welche je einen gegen eine Sitzfläche des Kupplungsgehäuses federbelasteten Ventilkörper aufweisen, die von einer an der jeweils anderen Kupplungshälfte ortsfest angeordneten Stoßflanke in die Ventil-Öffnungsstellung verlagerbar sind, wobei eine Stoßflanke zurückversetzt in der einen Kupplungshälfte angeordnet ist, wobei beide Ventilkörper zurückversetzt in den Kupplungshälften angeordnet sind.

An einer bekannten Schnellverschlußkupplung (DE-AS 1 228 470) nimmt die rückversetzte Stoßflanke der einen Kupplungshälfte zwar eine Verstecklage ein; der von der besagten Stoßflanke gesteuerte Ventilkörper reicht aber praktisch bis zum freien Ende der von einem Stecknippel gebildeten Endfläche der anderen Kupplungshälfte. Zufällige Berührungen an einer mit der Stoßflanke korrespondierenden, quer nach auswärts abstehenden Gegenfläche sind in der Lage, diese Kupplungshälfte unabhängig von der betrieblichen Funktionsweise zu öffnen. Das kann, je nach Einsatzart, erhebliche Verluste, insbesondere auch Umweltschäden verursachen.

Aufgabe der Erfindung ist es, eine gattungsgemäße Schnellverschlußkupplung unter dem erläuterten Sicherheitsaspekt gebrauchsvorteilhafter und durchströmungsgünstiger auszubilden.

Gelöst ist diese Aufgabe durch die im Anspruch 1 angegebene Erfindung.

Die Unteransprüche geben bevorzugte Ausgestaltungen der Schnellverschlußkupplung an.

Zufolge solcher Ausgestaltung ist eine Schnellverschlußkupplung erhöhten Gebrauchswerts erzielt. Die zur Kontrolle des Mediums eine betriebliche Steuerverlagerung aufnehmenden Teile der Schnellverschlußkupplung befinden sich in tiefer Verstecklage. Die baulichen Mittel sind einfach und zweckmäßig. Konkret ist dazu so vorgegangen, daß die rückversetzte Stoßflanke von einem zentralen, mediumumspülten Dorn gebildet ist, der in die andere Kupplungshälfte einfährt, wobei beide Ventilkörper zurückversetzt in den Kupplungshälften angeordnet sind. Die den Ventilkörper steuernde Stoßflanke kann zufolge Nutzung der axialen Tiefe leicht so gelegt werden, daß sie erst kurz vor Erreichen der schon in klassischer Weise abgedichteten Steck-Endstellung der Kupplungshälften ihre öffnende Steuerwirkung ausübt. Die rückversetzte Stoßflanke von einem zentral liegenden Dorn auszubilden, eröffnet den strömungstechnischen Vorteil der Vermeidung einer gravierenden Medienquerverlagerung in diesem Bereich; der Dorn kann aus einem äußerst querschnittsanteilgeringen, ja filigranen Gebilde bestehen. Weiter wird vorgeschlagen, daß die Medium-Durchströmöffnungen des Dornes Durchtrittsquerschnitte formen zur Steuerung eines federbelasteten Ventilkörpers der mit dem Dorn bestückten Kupplungshälfte mittels der vom freien Ende des Stecknippels gebildeten Stoßflanke. Die das Medium führenden Durchströmöffnungen erfüllen so eine Doppelfunktion. Die Stoßflanke des Stecknippels kann entsprechend durchgreifende Vorsprünge des Ventilkörpers unmittelbar abheben. Bei entsprechender Bestückung einer Schnellverschlußkupplung greift so im Gegenzug der mit seiner Stirnseite die andere Stoßflanke bildende Stecknippel in die eine Kupplungshälfte ein, wobei die räumliche Zuordnung dann zweckmäßig so ist, daß es zum überlagernden Abheben gleich zweier Ventilkörper kommt. Ist keine zu einer kurzen Bauform führende unmittelbare Steuerung, also Berührung von Stoßflanke des Stecknippels und von ihm betätigter Ventilverschlußkörper angestrebt, wird so vorgegangen, daß der mediumumspülte Dorn an einer mediumdurchspülten Büchse sitzt, die an ihrem dem Dorn gegenüberliegenden Ende, ihrem Rücken also, die Sitzfläche des Ventilkörpers der einen Kupplungshälfte bildet. Die damit zusammenhängende bzw. dies bedingende ortsfeste Zuordnung der Büchse ist als Basis weiterer Funktionen nutzbar, beispielsweiseise der der gehäuseseitigen Abdichtung. Überdies erweist es sich als vorteilhaft, daß die Büchse ein Schiebeglied trägt, welches, von der Stoßflanke des Stecknippels verlagert, den Ventilkörper in die Öffnungsstellung steuert. Um hier von innen nach außen arbeiten zu können, also praktisch eine Durchdringung der Funktionsteile zu eröffnen, wird weiter so vorgegangen, daß das Schiebeglied von einer die Büchse umfassenden Hülse gebildet ist, wobei für die Verlagerungssteuerung die Büchse mantelwandseitige Schlitze trägt, in welcher sich Stoßfinger der Hülse führen. Dieses als Zwischenglied fungierende Schiebeglied stellt praktisch eine Verlängerung der vom Stecknippel gebildeten Stoßflanke dar, um den Dornbereich zu überbrücken und an den recht tief eingelagerten Ventilkörper zu gelangen. Die Hülse ist in Richtung ihrer Grundstellung federbelastet. Auch sie wird zur Abdichtung dem Gehäuse gegenüber genutzt und übt dabei eine weitergehende Funktion dadurch aus, daß die Hülse Verriegelungskugeln einer Verriegelungseinrichtung abstützt und denselben Außendurchmesser hat wie der Stecknippel. Über die abgestützten Verriegelungskugeln wird an gattungsgemäßen Schnellverschlußkupplungen die unter Federwirkung stehende Verriegelungshülse im Zustand der Trennung zurückgehalten. Das stufenlos anschließende Unterlaufen der Verriegelungskugeln durch den den entsprechenden Außendurchmesser aufweisenden Stecknippel läßt folglich die Verriegelungshülse erst dann einsteueraktiv werden, wenn die funktionsgerechte Einstecktiefe des Stecknippels erreicht ist. Um trotz relativ kurzer Führungslänge entsprechender Ventilkörper eine einwandfreie Führung derselben sicherzustellen, bringt die Erfindung in Vorschlag, daß die Ventilkörper mit einem vor der Ventilsitzfläche angeordneten mediumdurchströmten Führungsring ausgestattet sind. Das hält auch Verkippungen der Ventilkörper gegenüber der korrespondierenden Sitzfläche respektive Ventilsitzfläche fern. Es kommt so auch nicht aus diesem Grunde zu Medienverlusten. Weiter wird vorgeschlagen, daß die Stoßfinger gegen den Stirnrand des einen Führungsringes treten. Das unterstützt entsprechend ein gleichmäßiges Aufsetzen und ebenfalls die erstrebte kippungsfreie Führung des Ventilkörpers. Auch erweist es sich als günstig, daß der Dorn im Querschnitt sternförmig gestaltet ist und sich zum freien Ende hin verjüngt. Auf diese Weise wird ein vorteilhafter Strömungsteiler erzielt bei günstiger zentraler Beaufschlagung der Steuermittel sprich Stoßflanke. Überdies ist es von Vorteil, daß die Büchse das Stützlager einer die Hülse in Grundstellung belastenden Druckfeder bildet. Was nun die Gestalt und einfache Zuordnung des Dornes betrifft, so wird in dieser Hinsicht vorgeschlagen, daß der Dorn vom Frontbereich eines mehrbeinigen Einsatzstückes der Kupplungshälfte gebildet ist und die Enden der Beine in Vertiefungen an der Innenwand einer zentralen Höhlung des Kupplungsgehäuses einsitzen. Ein solches Einsatzstück ist äußerst gedrungen ausbildbar mit durch die Mehrbeinigkeit hoher Eigenstabilität. Da keine bestimmte Winkelstellung für die Beine des Einsatzstückes angehalten werden muß, läßt sich eine fertigungsgünstige Zuordnung durch Bildung einer Ringnut erzeugen. Zur Fixierung des Einsatzstückes sind die speichenartig ausgerichteten Beine herangezogen, indem sie einfach in die Vertiefungen eingebogen werden. Das ist im Wege einer plastischen Verformung erreichbar. Eine alternative, gleichfalls günstige Lösung besteht darin, daß die freien Enden der Beine in die Vertiefungen eingefedert sind. Strömungsbegünstigend wirkt sich sodann die Maßnahme aus, daß die Beine in Strömungsrichtung liegende Flügelprofile besitzen. Letztere wirken strömungsteilend und lassen nach Überlaufen den Strömungsfluß wieder zusammentreten. Auf diese Weise ist die aus dem Strömungsfluß resultierende Belastung auf die Beine relativ gering. Um einen gefälligen Übergang und ein möglichst tiefes Eintauchen in den Stecknippel der anderen Kupplungshälfte zu ermöglichen, verlaufen die Beine viertelkreisförmig. Sie gehen zweckmäßig von einem projektilförmigen Kernstück aus. Um trotz schnittiger Beinprofile eine genügende Materialanhäufung zur Verankerung der freien Enden der Beine zu erhalten, sind diese hammerkopfartig gestaltet. Die Hammerkopfform ist selbstredend auf die Form der Vertiefungen, respektive der Ringnut abgestimmt. Eine vorteilhafte Fertigungsvariante des Dornes besteht darin, daß das mehrbeinige Einsatzstück als Blechbiegeteil ausgebildet ist. Als günstig erweist es sich dabei, daß der Grundzuschnitt ein Doppel-T-Stanzling ist, dessen T-Schenkel die Beine bilden (vier Stück) und der U-förmig gefaltete Steg das projektilförmige Kernstück des Dornes bildet. Endlich erweist es sich noch als vorteilhaft, daß die freien Enden der Beine des Blechbiegeteils aus in Umfangsrichtung der Innenwand der Höhlung des Kupplungsgehäuses abgebogenen Abschnitten gebildet sind. Letzteres ermöglicht eine besonders wirtschaftliche Herstellung des Einsatzstükkes. Es wird zweckmäßig auf nichtrostenden Stahl zurückgegriffen, wobei auch hier die Montage über eine elastische Rückfederung oder eine plastische Verformung durchgeführt werden kann.

Der Gegenstand der Erfindung ist nachstehend anhand zweier zeichnerisch veranschaulichter Ausführungsbeispiele näher erläutert. Es zeigt:
- Fig. 1: die erfindungsgemäße Schnellverschlußkupplung in gekuppeltem Zustand, und zwar im Längsschnitt gemäß Schnittlinie I-I in Figur 5, jedoch in eine vertikale Diametrale projiziert, gemäß erstem Ausführungsbeispiel,
- Fig. 2: die eine Kupplungshälfte dieser Schnellverschlußkupplung in nicht gekuppeltem Zustand,
- Fig. 3: die zugehörige andere Kupplungshälfte, beide Ventile verschlossen,
- Fig. 4: eine der Figur 1 entsprechende Darstellung, und zwar kurz vor dem Abheben der Ventilverschlußkörper und der anschließenden Verriegelung über die dargestellte Verriegelungseinrichtung,
- Fig. 5: den Schnitt gemäß Linie V-V in Figur 1,

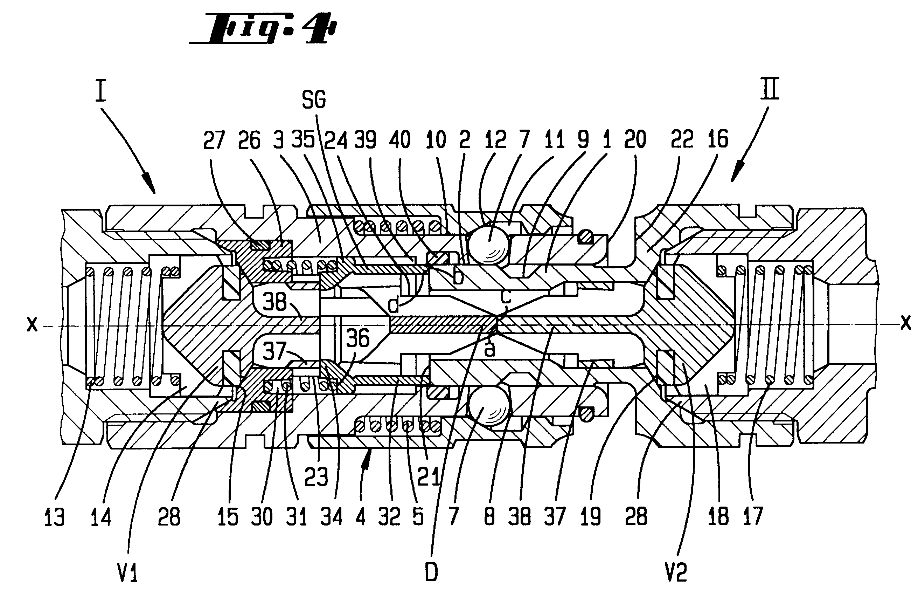

- Fig. 6: als Teil des Eingerichtes der einen Kupplungshälfte den Dorn mit Büchse, in Perspektive,
- Fig. 7: das zugehörige Schiebeglied in Form einer Hülse, ebenfalls perspektivisch sowie in

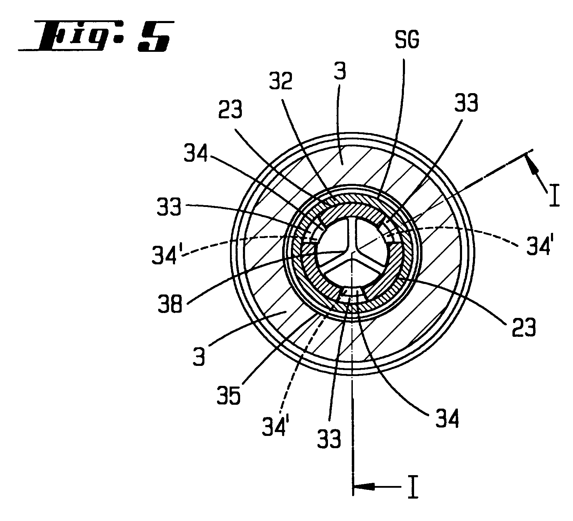

- Fig. 8: den zugehörigen Ventilkörper gleichfalls in schaubildlicher Darstellung,
- Fig. 9: die Einheit Dorn/Büchse in Seitenansicht,
- Fig. 10: die Stirnansicht auf das rechtsseitige Ende,

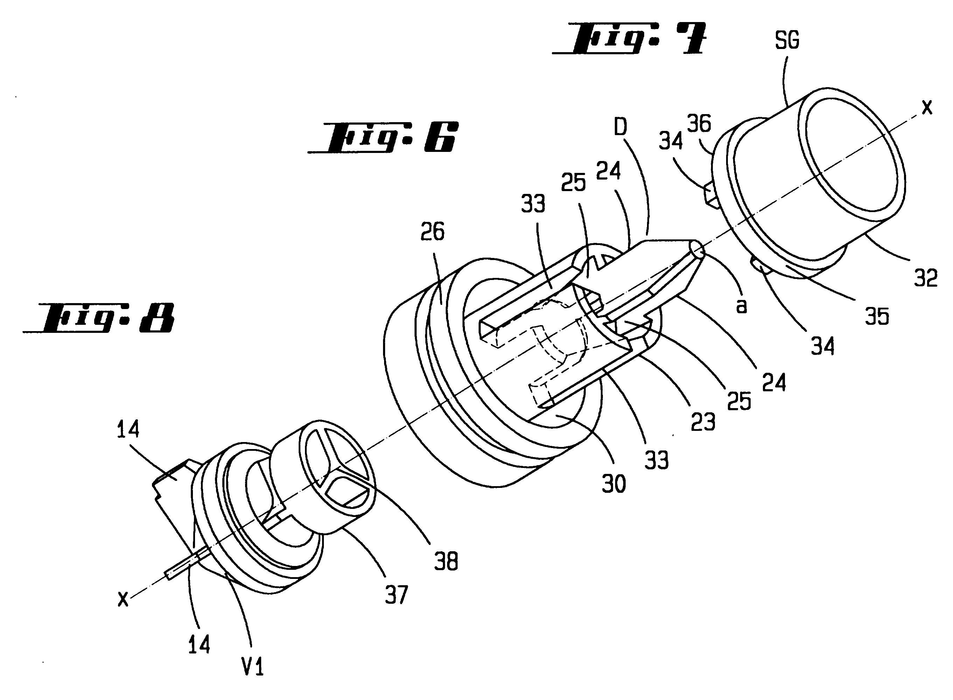

- Fig. 11: die Stirnansicht auf das linksseitige Ende dieser Einheit Dorn/Büchse,
- Fig. 12: die das Schiebeglied bildende Hülse in Seitenansicht,
- Fig. 13: die Stirnansicht gegen das rechtsseitige und

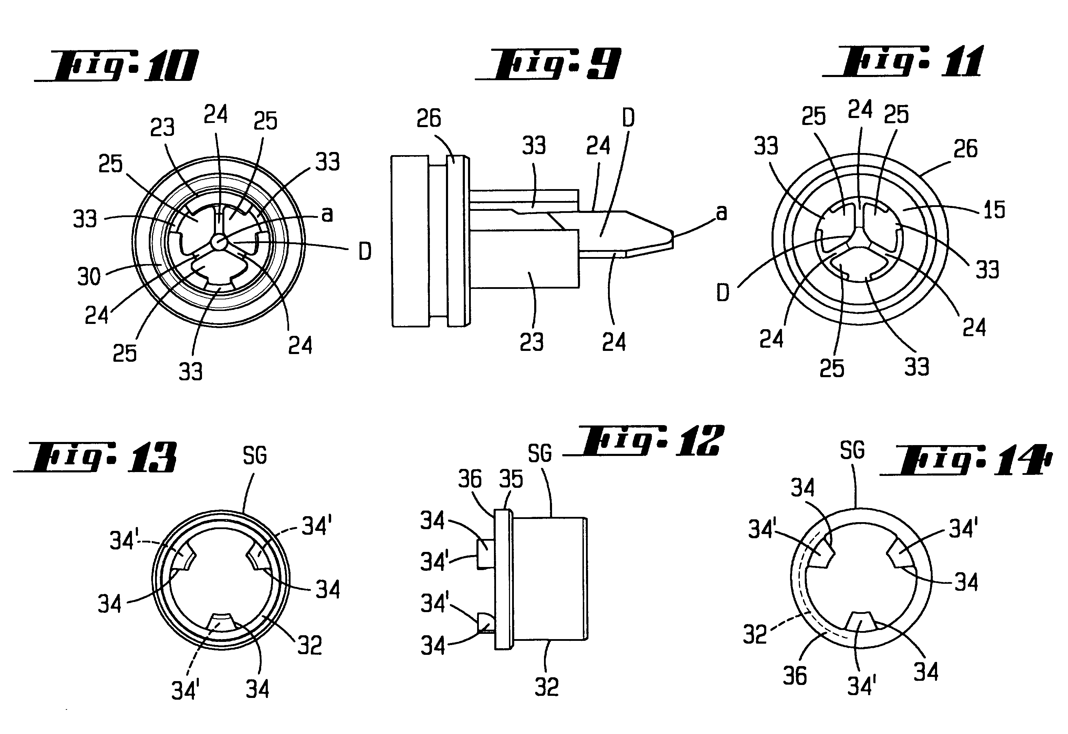

- Fig. 14: die Stirnansicht gegen das linksseitige Ende des Schiebegliedes,

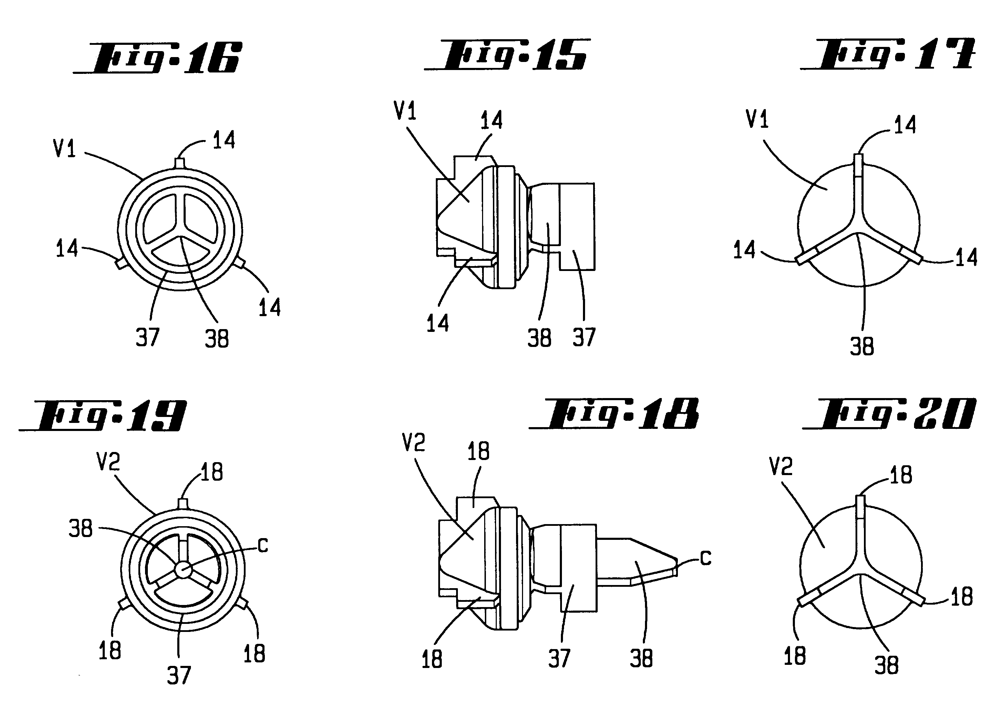

- Fig. 15: den Ventilkörper der einen Kupplungshälfte in Seitenansicht,
- Fig. 16: die Stirnansicht gegen das rechtsseitige und
- Fig. 17: die Stirnansicht gegen das linksseitige Ende dieses Ventilkörpers,
- Fig. 18: den Ventilkörper der anderen Kupplungshälfte in Seitenansicht,

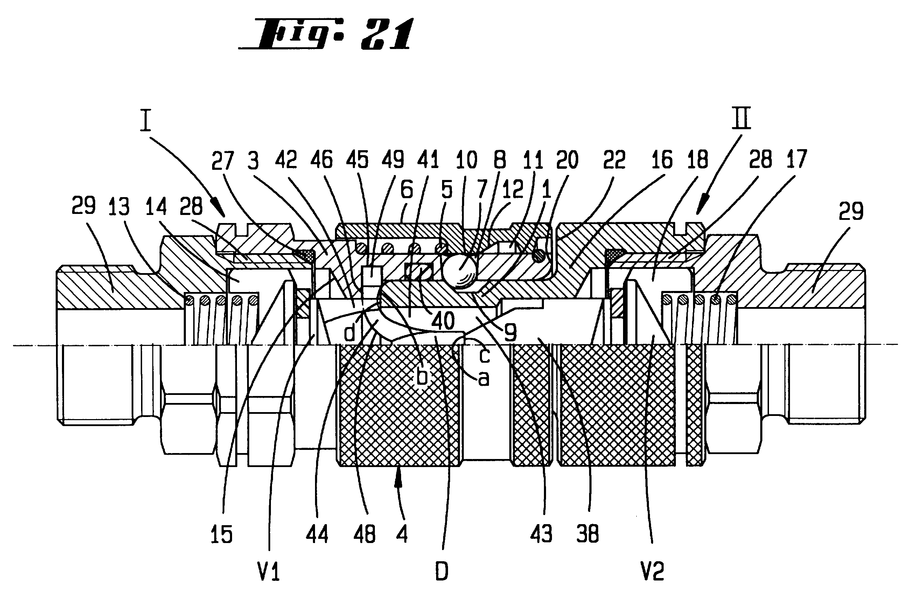

- Fig. 19: die Stirnansicht gegen das rechtsseitige und
- Fig. 20: die Stirnansicht gegen das linksseitige Ende dieses Ventilkörpers,
- Fig. 21: die erfindungsgemäße Schnellverschlußkupplung in Darstellung wie Figur 1, gemäß zweitem Ausführungsbeispiel,
- Fig. 22: die eine Kupplungshälfte dieser Schnellverschlußkupplung in nicht gekuppeltem Zustand,
- Fig. 23: die zugehörige andere Kupplungshälfte, beide Ventile geschlossen,
- Fig. 24: den gegenüber dem Dorn des ersten Ausführungsbeispieles abgewandelten Dorn gemäß zweitem Ausführungsbeispiel, und zwar in perspektivischer Einzeldarstellung,
- Fig. 25: diesen Dorn in Seitenansicht,
- Fig. 26: die Draufsicht hierzu,
- Fig. 27: den Ventilkörper der einen Kupplungshälfte in Seitenansicht,
- Fig. 28: die Stirnansicht gegen das rechtsseitige und
- Fig. 29: die Stirnansicht gegen das linksseitige Ende dieses gegenüber Figur 15 abgewandelten Ventilkörpers,
- Fig. 30: eine Variante des Dornes respektvie Einsatzstückes in vergrößerter, perspektivischer Einzeldarstellung, und zwar als Blechbiegeteil realisiert,
- Fig. 31: diesen Dorn einer Kupplung gemäß Figur 21 einverleibt,
- Fig. 32: den Dorn in Seitenansicht,
- Fig. 33: die Draufsicht hierzu und
- Fig. 34: den Dorn in gegenüber Figur 32 um 90° gedrehter Stellung.

Die dargestellte Schnellverschlußkupplung beider Ausführungsbeispiele besteht aus zwei Kupplungshälften, bezeichnet mit I und II.

Die eine Kupplungshälfte I bildet ein Matrizenteil, die andere II ein Patrizenteil. In Steckverbindungsstellung tritt ein sogenannter Stecknippel 1 der anderen Kupplungshälfte II passend in eine zentralliegende Höhlung 2 der einen Kupplungshälfte I ein. Diese Steckverbindungsstellung wird automatisch verriegelt. Dazu trägt die Mantelwand eines Gehäuses 3 der einen Kupplungshälfte I eine einhandbetätigbare Verriegelungseinrichtung 4. Letztere steht unter Wirkung einer Druckfeder 5. Entgegen der Kraft der Druckfeder 5 läßt sich eine Verriegelungshülse 6, die sich auf dem Gehäuse 3 anschlagbegrenzt führt, aus der verriegelungsaktiven anschlagbegrenzten Endstellung verlagern.

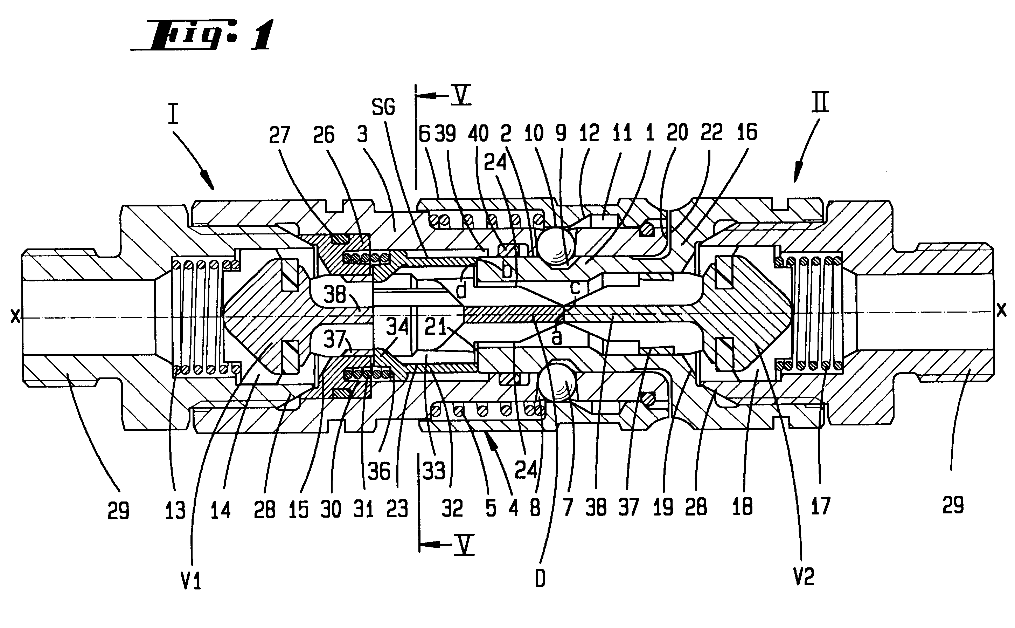

Weiterer Bestandteil der Verriegelungseinrichtung 4 sind Sperr- oder Verriegelungskugeln 7. Die sitzen in je einer radial gerichteten Bohrung 8 des die zylindrische, zentrale Höhlung 2 formenden Gehäuses 3. In Verriegelungsstellung (Figur 1) ragen die Verriegelungskugeln 7 sperrend in eine Ringnut 9 auf der Mantelfläche des zylindrischen Stecknippels 1. Die Ringnut 9 weist trapezförmigen Querschnitt auf. Die breitere Basis fluchtet mit der Mantelwand. Die durch das entsprechende Querschnittsprofil entstehenden Flanken nehmen einen Winkelverlauf von 45° zur Längsmittelachse x-x der Schnellverschlußkupplung und wirken in bekannter Weise sperrend. Die periphere Abstützung der Reihe aus Verriegelungskugeln 7 bewirkt ein radial vorspringender Ringbund 10 der Verriegelungshülse 6. Jenseits einer eine Federkammer bildenden Ausdrehung für die Druckfeder 5 bildet besagte Verriegelungshülse 6 innenseitig eine Ausweichausnehmung 11 aus, versehen mit einer Steuerflanke 12. Die ebenfalls ringförmige Ausweichausnehmung 11 ist von solcher radialer Tiefe, daß die in die Höhlung 2 gehende exponierte Vorstandlage der Verriegelungskugeln 7 bei Eintauchen in die Ausweichausnehmung 11 aufgehoben wird; der Stecknippel 1 läßt sich ziehen bzw. einstecken.

Die das Matrizenteil bildende eine Kupplungshälfte I enthält einen unter Federwirkung stehenden Ventilkörper V1. Die ihn belastende, axial wirkende Druckfeder heißt 13. Sie stützt sich einerends gehäuseseitig ab und wirkt mit ihrer anderen endständigen Federwindung an Führungsflügeln 14 des Ventilkörpers V1. Die dichtringbewehrte Seite des Ventilkörpers V1 wirkt mit einer ortsfesten Sitzfläche respektive Ventilsitzfläche 15 des Gehäuses 3 zusammen. In entkuppeltem Zustand ergibt sich automatisch das erstrebte schnelle Schließen dieser Kupplungshälfte I.

Auch die andere Kupplungshälfte II enthält entsprechende Mittel für den Schnellschluß. Im Gehäuse 16 dieser Kupplungshälfte befindet sich ein ebenfalls axial geführter Ventilkörper V2. Die ihn in Schließrichtung belastende Druckfeder trägt das Bezugszeichen 17. Sie stützt sich gehäuseseitig ab und wirkt gegen von Führungsflügeln 18 geformte Schultern. Die auch hier mit der dichtringbewehrten Seite dieses Ventilkörpers V2 zusammenwirkende Stützfläche bzw. Ventilsitzfläche heißt 19.

Beide Sitzflächen bzw. Ventilsitzflächen 15,19 sind zum Inneren des Gehäuses 3 bis 16 hin trichterförmig abfallend ausgebildet. Das hat für die federnd dagegen gedrückten Ventilkörper zentrierende Wirkung.

Unter Steckzuordnung der Kupplungshälften I,II heben die Ventilkörper V1, V2 von ihrer Ventilsitzfläche 15 bzw. 19 ab, so daß der Durchströmweg für das die Schnellverschlußkupplung passierende Medium frei wird. Diese Freigabe geschieht über Stoßflanken.

Die eine Stoßflanke a befindet sich zurückversetzt liegend im Inneren der einen Kupplungshälfte I der Verschlußkupplung. Sie ist ortsfest. Der Rückversatz gegenüber dem in gleicher Richtung weisenden Ende, dem Stirnrand 20 des Gehäuses 3 nämlich, geht deutlich aus Figur 2 hervor.

Die andere steueraktive Stoßflanke b befindet sich an der dem Stirnrand 20 zugewandten, exponierten, freien Endfläche der anderen Kupplungshälfte II, nämlich an dem dortigen Stecknippel-Stirnrand 21 des Gehäuses 16. Konkret ist dabei so vorgegangen, daß die rückversetzte Stoßflanke a von einem zentralen, mediumumspülten Dorn D gebildet ist, der in den mit seiner Stirnseite bzw. seinem Stirnrand 21 die andere Stoßflanke b bildenden Stecknippel 1 der anderen Kupplungshälfte II einfährt. Diese eingefahrene Stellung ist die in Figur 1 dargestellte Kupplungsstellung, welche endlich begrenzt ist durch eine querliegende Anschlagschulter 22 des zufolge der Nippelbildung abgesetzten Gehäuses 16 der Kupplungshälfte II. Der Stirnrand 21 befindet in Figur 1 unmittelbar davor endend.

Vor der besagten Anschlagschulter 22 endet auch, selbst anschlagbegrenzt, die Verriegelungshülse 6.

Der mit seinem freien Ende die Stoßflanke a bildende Dorn D geht von einer Büchse 23 aus. Letztere ist fest mit dem Gehäuse 3 verbunden. Er liegt in Form eines im Querschnitt sternförmig gestalteten Brückenteils im Inneren der Büchse 23. Der Stern ist dreizackig. Von einem zentralliegenden Kern gehen drei in winkelgleicher Anordnung liegende Radialstege oder Speichen 24 aus, welche in der Innenwandung der Büchse 23 wurzeln. Der Dorn D kann so kernnah mediumumspült werden zufolge der voneinander getrennten drei Durchströmkanäle 25. Ventilkörperseitig geht die zylindrische Büchse 23 in einen Ringbund 26 über, welcher gegenüber dem ihn aufnehmenden, querschnittsbreiter ausgedrehten Abschnitt des Gehäuses 3 abgedichtet ist. Es handelt sich um eine Ringdichtung 27. Letzterer liegt in einer Ringnut des Ringbundes 26. Die Fesselung des besagten Ringbundes 26 geschieht von der die erwähnte Ventilsitzfläche 15 bildenden Seite her. Erkennbar ist die Ventilsitzfläche peripher verlängert. Sie wird von einem ihn überfangenden, konischen Endabschnitt eines Schraubteils 28 dicht und lagegesichert überfangen. Das Schraubteil 28 ist Teil eines das Gehäuse 3 mitbildenden Schraubstutzens 29.

In Fortsetzung der Erstreckung der Mantelwand der Büchse 23 ist der eine größere Materialanhäufung bildende Ringbund 26 zur Mitbildung einer Federkammer 30 ausgedreht. Es handelt sich um eine Ringnut. Die Federkammer 30 nimmt eine Druckfeder 31 in Form einer Schraubengangdruckfeder auf. Die stützt sich auf dem Grund der Ringnut, welche so als Stützlager fungiert, ab und belastet mit ihrer anderen endständigen Federwindung ein Schiebeglied SG in Form einer Hülse 32.

Das als Schiebeglied SG oder Steuerbrücke fungierende Zwischenglied ist nur dem ersten Ausführungsbeispiel zugeordnet.

Die Hülse 32 ist längsverschieblich auf der Mantelwand der Büchse 23 anschlagbegrenzt gelagert. Die Hülse 32 fungiert als Zwischenglied für die Freigabe des Ventilkörpers V1, indem die Stoßflanke b des Stecknippels 1 unter Komprimierung der Druckfeder 31 nach links verlagert wird und dadurch den Ventilkörper V1 in die Offenstellung steuert. Das Schiebeglied SG lenkt die Betätigungsbewegung von der Außenseite der Büchse 23 auf die Innenseite der Büchse 23, in der, wie erläutert, der Ventilkörper V1 längsverschieblich gelagert ist. Die entsprechende Durchdringung der Mittel bzw. den Durchgriff zu einer solchen Steuerung bringt eine Maßnahme dahingehend, daß die Büchse 23 mantelwandseitige bis zum Inneren der Büchse reichende Schlitze 33 aufweist. In diesen axial orientierten Schlitzen 33 führen sich die Mantelwand der Büchse 32 radial einwärts überragende Stoßfinger 34 der Hülse 32. Es sind insgesamt drei winkelgleich beabstandete Schlitze 33 realisiert. Die Anzahl der Stoßfinger 34 entspricht diesen. Die Flanken der Schlitze 33 und die der Stoßfinger 34 konvergieren nach innen.

Bezüglich des konkreten Aufbaues der Hülse 32 als Schiebeglied SG wird auf die Figurenfolge 12 bis 14 verwiesen. Wie dieser Darstellung entnehmbar, bildet die Hülse 32 im Bereich der Stoßfinger 34 eine umlaufende Ringrippe 35 aus, deren dem Ventilkörper V1 zugewandte, sich quer zur Längsmittelachse x-x der Schnellverschlußkupplung erstreckende Ringschulter 36 das dortige Widerlager für die Druckfeder 31 stellt. Die Mantelwand der Ringrippe 35 führt sich an der Innenwandung der abgesetzten Höhlung 2 des Gehäuses 3.

Die über die Wandungsdicke der Büchse 23 nach innen vorragenden Stoßfinger 34 wirken gegen das dortige Ende des Ventilkörpers V1. Die entsprechende Stirnfläche 34' der Stoßfinger 34 tritt korrekt gesagte gegen einen dem Ventilkörper V1 dort angeformten Führungsring 37. Unter Berücksichtigung des ebenfalls sternförmig gestalteten Schaftes 38 des Ventilkörpers V1 entsteht im Hinblick auf die dazu konzentrische Anordnung des Führungsringes 37 ein Mediendurchströmbereich zwischen Schaft 38 und dem sperrend wirkenden Teil des Ventilkörpers, dem sogenannten Teller, dessen Peripherie sich über die erwähnten Führungsflügel 14 unter Belassung axialer Durchlässe entsprechend verbreitert. Der maximale Freigabehub des Ventilkörpers V1 wird begrenzt, indem die Stoßfinger 34 letztendlich gegen den der Stirnfläche 34' zugewandten Grund der in Gegenrichtung vollständig offenen Schlitze 33 treten. In dieser Stellung ist die Druckfeder 31 praktisch maximal zusammengedrückt. Sie knöchert nahezu.

Der Ventilkörper V2 der anderen Kupplungshälfte II weist ebenfalls einen sternförmig gestalteten Schaft 38 auf. Die in Dreiteilung vorgenommene Flügelbildung dieses Schaftes 38 wird auch hier peripher begrenzt durch einen mediumdurchströmten Führungsring 37. Dieser Ring führt sich an einer entsprechenden Ausdrehung des Stecknippels 1.

In Kupplungsstellung (Figur 1) hebt die Stoßflanke a des Dornes D den Ventilkörper V2 des Patrizenteiles von seiner Ventilsitzfläche 19 ab, so daß auch hier unter Passieren des etwa tellerförmigen Ventilkopfes das Medium den belassenden Freiraum zwischen den Führungsflügels 18 passieren kann. Dabei wird der Führungsring 37 gleichfalls mediumdurchströmt.

Die zum Matrizenteil erwähnte Mehrteiligkeit des Gehäuses 3 gilt auch in Bezug auf das Gehäuse 16 des Patrizenteils einschließlich der metallischen Klemm/Dichtwirkung zwischen den beiden gehäusebildenden Teilen, von denen das rechts abgehende Schraubteil 28 wiederum einen Schraubstutzen 29 formt. Über solche Schraubstutzen 29 kann mit Hilfe einer Überwurfmutter ein Schlauch oder eine stehende Leitung angeschlossen werden.

Das der Stoßfinger 34 gegen den Stirnrand des einen Führungsringes 37 tritt, ergibt sich deutlich aus Figur 1.

Bleibt noch festzuhalten, daß der im Querschnitt sternförmige dreistegige Dorn D sich zu seinem freien Ende hin bis auf einen Kerndurchmesser verjüngt. Die entsprechende Konvergenz der Stege oder Speichen 24 liegt sinngemäß auch in Bezug auf das Profil des Schaftes 38 des Ventilkörpers V2 vor, hier mit einem gleichen im Winkel von ca. 30° bis 40° liegenden Verjüngungsgrad. Die ventilkörperseitige Gegenfläche der Stoßflanke a heißt c, die der Stoßflanke b, gebildet vom geschlossenen Ringrand der Hülse 32, d.

Die Mantelfläche der Hülse 32 steht überdies in Wirkverbindung mit der Verriegelungseinrichtung 4 der Schnellverschlußkupplung, indem in der anschlagbegrenzten Grundstellung der Hülse 32, definiert durch eine gehäuseseitige Ringschulter 39, die Hülse bis in den Bereich der Verriegelungskugeln 7 reicht. Die Mantelwand der Hülse schiebt die Verriegelungskugeln 7 mantelwandseitig des Gehäuses 3 aus, bildet also zugleich einen inneren Stützkern für diese Kugeln in Entriegelungsstellung, in welcher die Verriegelungshülse 6 gespannt zurückgezogen gehalten ist (Figur 2). Die Zurückziehstellung der Verriegelungshülse 6 wird gleichwohl aufrechterhalten, wenn der Stecknippel 1 in Höhlung 2 des Matrizenteiles einfährt, da der Außendurchmesser des Stecknippels 1 dem der Hülse 32 entspricht. Vor Wegschieben der Hülse 32 baut sich in Form des Stecknippels also auch der gleiche Stützkern auf, bis die Ringnut 9 in den Querebenenbereich der Verriegelungskugelreihe tritt.

Die Funktion ist, kurz zusammengefaßt, wie folgt: Bei getrennter Schnellverschlußkupplung ist der Mediendurchgang für beide Kupplungshälften I,II gesperrt. Durch axial orientiertes Einführen des Stecknippels 1 in die Höhlung 2 durchläuft der Stecknippel 1 zunächst den Freiraum vor der Hülse 32. Schließlich trifft die Stoßflanke b gegen die Hülse 32. Dadurch wird die Hülse 32 entgegen der Kraft der Druckfeder 31 nach links verschoben. Bei immer noch geschlossenen Ventilkörpern V1,V2 durchläuft der Stecknippel 1 zunächst einen Freihub y. Am Ende dieses Freihubes y gelangen die Stoßfinger 34 gegen den Fuß bzw. Schaft des Verriegelungskörpers V1. Sie setzen auf dem ihnen zugewandten Stirnrand des Führungsringes 37 auf. In dieser Stellung liegt aufgrund der Abdichtung des Durchgangsweges für das Medium, realisiert durch die Metalldichtungen 28, die Ringdichtung 37 und eine weitere Dichtung 40 zwischen Höhlung 2 und der Mantelfläche des Stecknippels 1 keine Verlustgefahr vor. Unabhängig von den vorliegenden Druckverhältnissen in den Leitungen treten von daher keine Leckagen auf. Die Dichtung 40 ist vorrangig in Wirkung getreten. Eine etwaige, allenfalls geringe Leckage ergibt sich aus dem Bereich der Eingerichtteile der Kupplung. Durch einen letzten, kurzen Öffnungshub z über die Stoßflanke b via Schiebeglied SG wird nun der Ventilkörper V1 entgegen Federbelastung durch die Druckfeder 5 von seiner Ventilsitzfläche 15 abgehoben. Gleiches findet überlagernd im Gegenzug statt, indem die ortsfeste Stoßflanke a den vor ihr liegenden Ventilverschlußkörper V2 von seiner Ventilsitzfläche 19 entgegen Federwirkung abhebt. Die Verriegelungshülse 6 schnappt in ihre verriegelungsaktive bzw. -sichernde Stellung, dargestellt in Figur 1. Das Medium kann nun strömen.

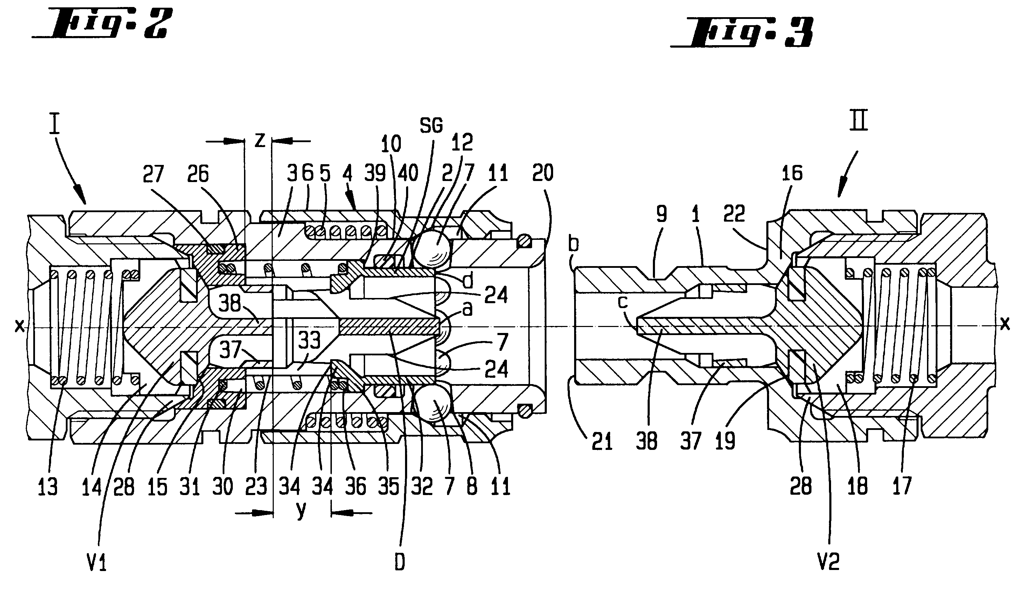

Zur Entkupplung der Schnellverschlußkupplung wird einfach die Verriegelungshülse 6 in Einhandbedienung entgegen der Federbelastungsrichtung nach links verlagert und dabei das Matrizenteil vom Patrizenteil abgezogen. Es ergibt sich dann die in den Figuren 2 und 3 wiedergegebene Situation: Die Ventilkörper V1 und V2 sind federbelastet wieder geschlossen. Das geschieht praktisch spritzfrei. Nach Entriegelung wirken die Druckfedern 5, 13, 17 und 31 als Trennhilfe.

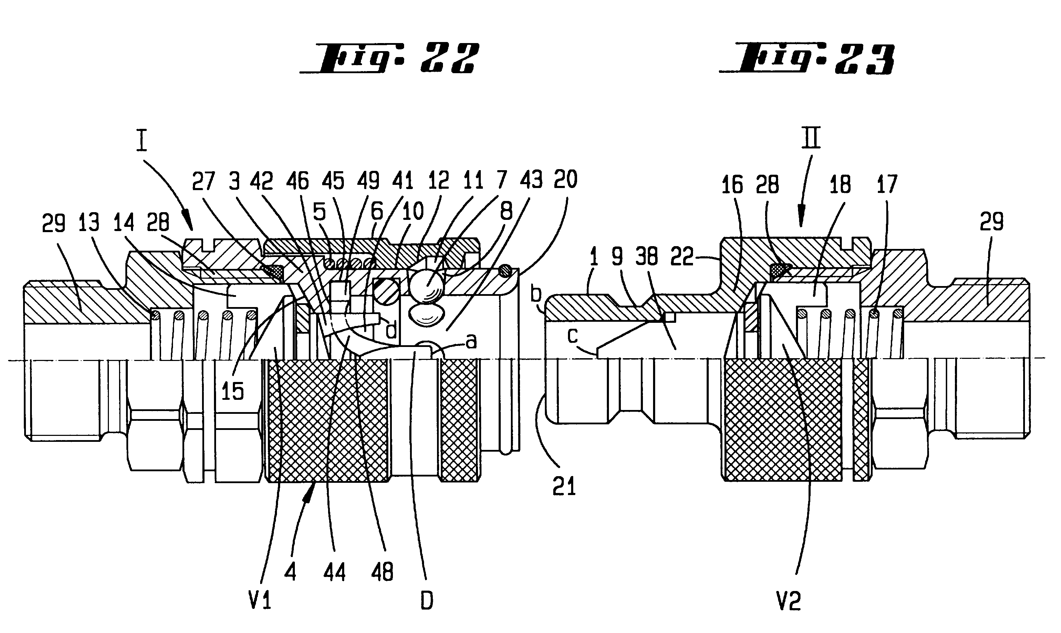

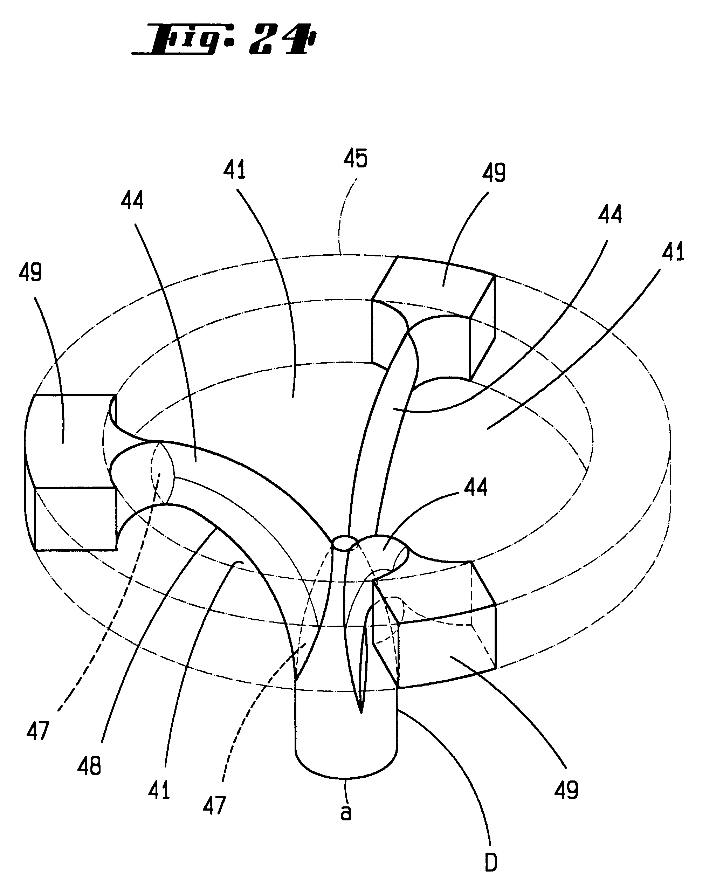

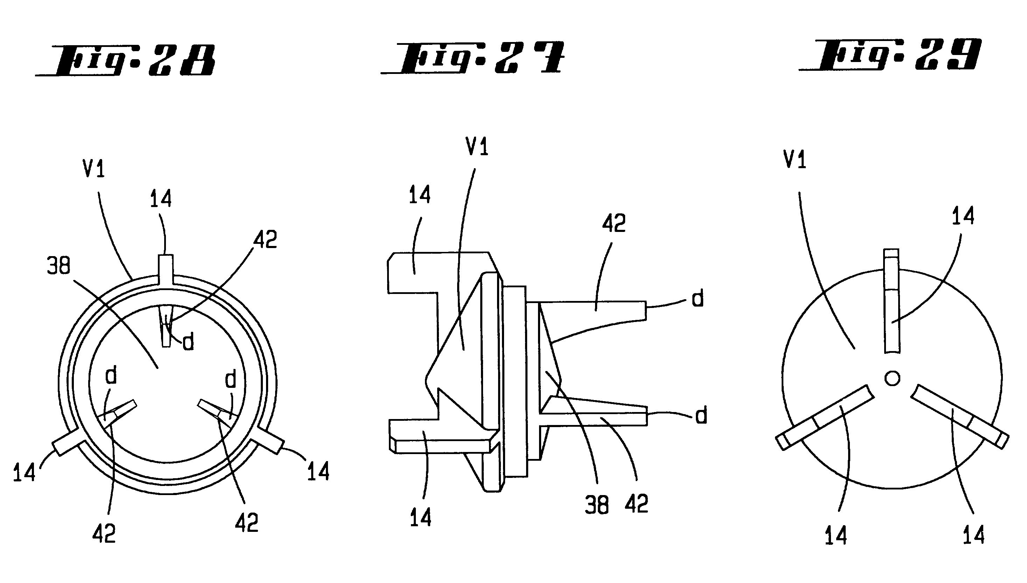

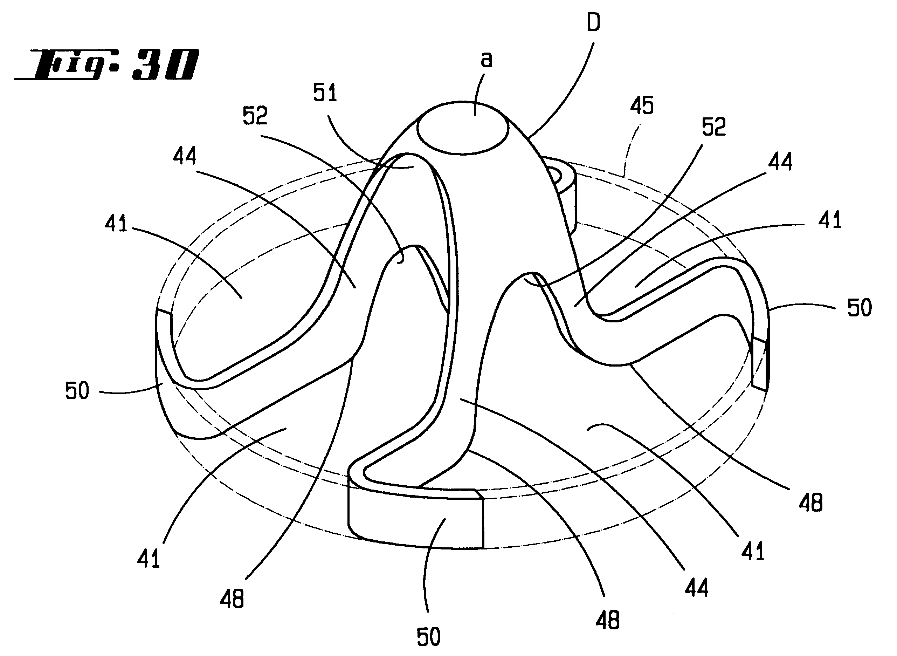

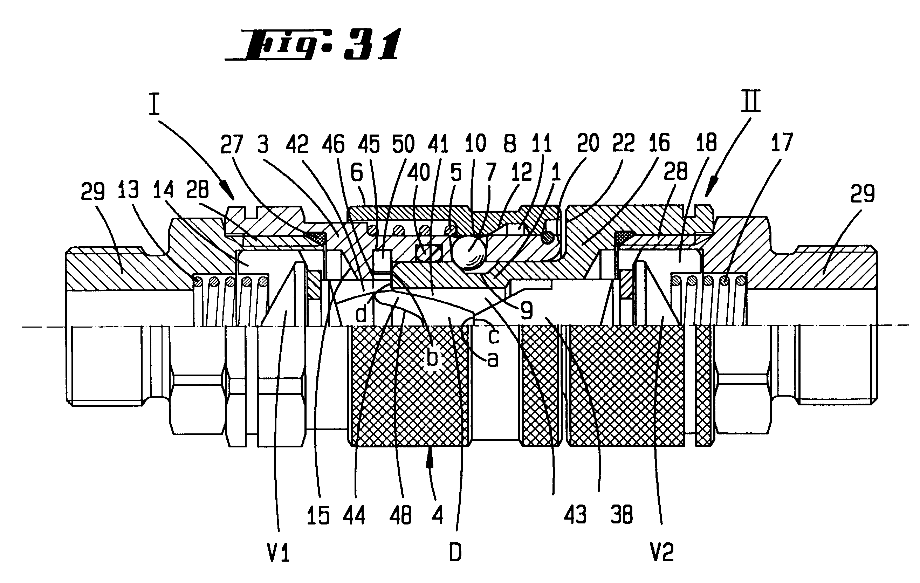

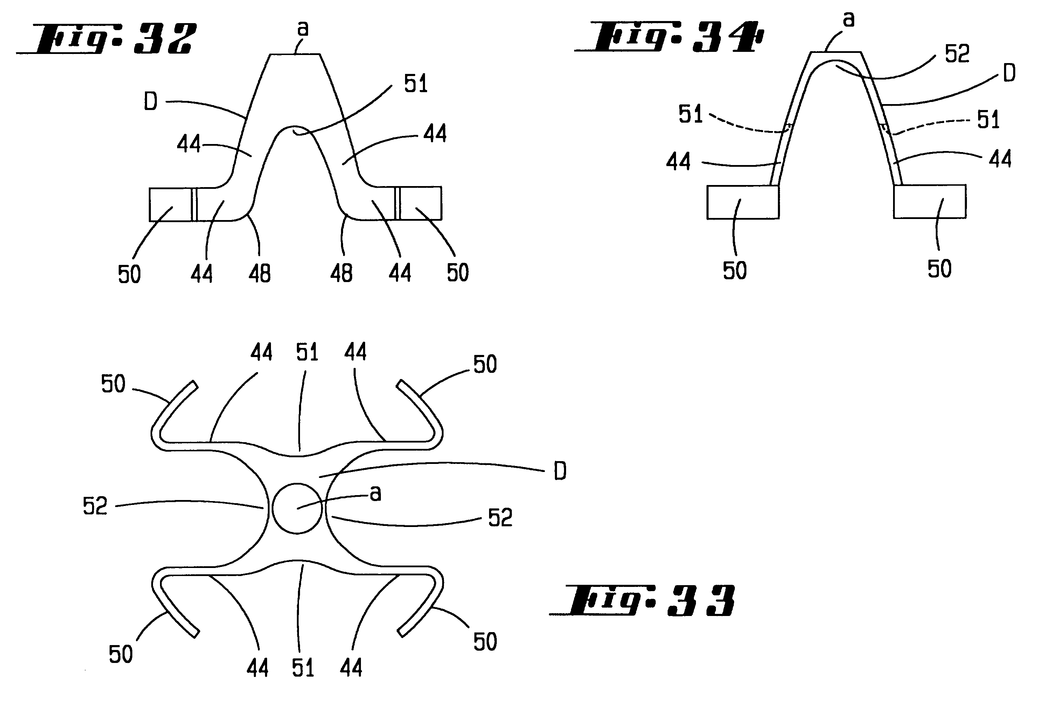

Das in den Figuren 21 bis 34 dargestellte Ausführungsbeispiel ist prinzipiell gleichen Aufbaues wie das erste Ausführungsbeispiel. Die Bezugsziffern sind sinngemäß angewandt, zum großen Teil ohne textliche Wiederholungen. Ein baulicher Unterschied gegenüber dem ausführlich erläuterten ersten Ausführungsbeispiel besteht darin, daß das Schiebeglied SG als Zwischenglied zwischen Stecknippel 1 und Ventilkörper V1 entfällt; vielmehr treten Stecknippel 1 und Ventilkörper V1 nun unmittelbar steuernd gegeneinander. Das erbringt neben einer baulichen Vereinfachung eine noch gedrungenere Gestalt der erfindungsgemäßen Schnellverschlußkupplung. Das Ganze beruht auf der Sternform (querschnittsbezogen) des Dornes D. Der beläßt realtiv große Medium-Durchtrittsöffnungen 41. Statt der Stoßfinger 34 des Schiebegliedes SG durchgreifen nun leistenartige Vorsprünge 42 des Ventilkörpers V1 im wesentlichen axial orientiert die besagten Medium-Durchtrittsöffnungen 41. Letztere formen somit Durchtrittsquerschnitte zur Steuerung des federbelasteten Ventilkörpers V1, indem das freie Ende des Stecknippels 1 der Kupplungshälfte II, auch hier als Stoßflanke b wirkend, den Ventilkörper V1 von seiner Ventilsitzfläche 15 abhebt. Diese Situation ist in Figur 21 wiedergegeben. Es sind insgesamt drei winkelgleich verteilt angeordnete leistenartige Vorsprünge 42 realisiert, die mit ihren freien Enden die auf einer gemeinsamen Querebene zur Längsmittelachse x-x liegende Stoßflanke d formen.

Die periphere Randkante der leistenartigen Vorsprünge 42 ist parallel verlaufend zur Längsmittelachse x-x ausgerichtet. Sie (42) führen sich, nach einer zylindrischen Mantelfläche ausgerichtet, an der Innenwand der zentralen Höhlung 2 des Kupplungsgehäuses 3. Die Innenseite der leistenartigen Vorsprünge 42 setzen etwa fluchtend zur zylindrischen Innenwandung des Stecknippels 1 an und gehen, sich zum Wurzelbereich der Vorsprünge 42 kontinuierlich erbreiternd, in die dortige flach kegelstumpfförmige Fläche des Ventilkörpers V1 über. Auch in Gegenrichtung ist eine solche ausgebildet.

Der als Formteil (vergleiche Figur 24) oder als Blechbiegeteil (vergleiche Figur 30) realisierte Dorn D ist vom Frontbereich 43 eines mehrbeinigen Einsatzstückes der Kupplungshälfte I realisiert. Der Dorn D besitzt gemäß Version Fig. 24 ein projektilförmiges Kernstück. Letzteres spitzt in Richtung der einen Kupplungshälfte I aus und ist massiv. Die Ausspitzung setzt auf halber Länge ein und endet in einer leichten Spitzen-Abplattung. Diese halbe Länge bildet den Wurzelbereich ansetzender Beine 44. Es handelt sich hier um drei winkelgleich verteilt angeordnete Beine 44. Es können auch mehr sein.

Die freien Enden der Beine 44 sind in Vertiefungen an der Innenwand der zentralen Höhlung 2 verankert. Sie sind so zumindest axial unbeweglich verankert.

In vorteilhafter Weise sind die verankernden Vertiefungen in Form einer gemeinsamen Ringnut 45 gestaltet. Die entsprechend formschlüssige Einlagerung ergibt sich aus Figur 21.

Bei Montage wird der als Einsatzstück gestaltete Dorn D vom freien, offenen Ende des Kupplungsgehäuses 3 her eingesetzt. Das kann unter Verwendung eines Anziehers geschehen, der die Peripherie der Beine 44 von den vorhergehenden Vertiefungen der Höhlung 2 fernhält. Mit Erreichen der in Figur 21 dargestellten Endposition werden die freien Enden der Beine 44 dann in die Vertiefungen respektive in die Ringnut 45 eingebogen. Das geschieht in plastischer Verformung.

Alternativ kann jedoch auch so vorgegangen werden, daß die freien Enden der Beine 44 in die Vertiefungen eingefedert sind. Hierzu wird entsprechend rückstellfähiges Material verwendet und selbstredend der erwähnte, zweckmäßig rohrförmige, dünnwandige Anzieher.

Diesbezüglich bietet sich die weiter oben im einzelnen beschriebene, als Blechbiegeteil gestaltete Dorn-Version an.

Die der Stoßflanke b weiter beabstandete Flanke der Ringnut 45 geht in eine Schulter 46 über. Diese erstreckt sich senkrecht zur Längsmittelmittelachse x-x der Schnellverschlußkupplung und bildet eine definitive Einschubbegrenzung für den Dorn D. Im Bereich der Schulter 46 liegt eine gegenüber dem Abschnitt, der den Stecknippel 1 aufnimmt, querschnittsreduzierte Zone vor, die sich im Rücken der Schulter 46 aber, wie aus der Zeichnung ersichtlich, weitet, dies zur Ermöglichung des Durchflusses bei geöffnetem Ventilkörper V1.

In strömungstechnischer Hinsicht erweist es sich als vorteilhaft, daß die Beine 44 in Strömungsrichtung liegende Flügelprofile besitzen. Die entsprechenden, einen etwa linsenförmigen Querschnitt aufweisenden Querschnittsfelder ergeben sich aus Figur 24 und sind dort mit 47 bezeichnet. Ihr (44) Profil entspricht praktisch dem Klingenprofil eines zweischneidigen Schwertes.

Das dem projektilförmigen Kernstück des Dornes D näherliegende Ende ist von deutlich größerer Breite als das freie.

Die Beine 44 fächern straußartig aus, d.h. sie nehmen, ausgehend von einer anfänglich mehr axialen Ausrichtung einen zum freien Ende hin zunehmend radialen Verlauf, dies in Form eines Bogens 48. Der Bogen 48 ist im wesentlichen vierteilkreisförmig.

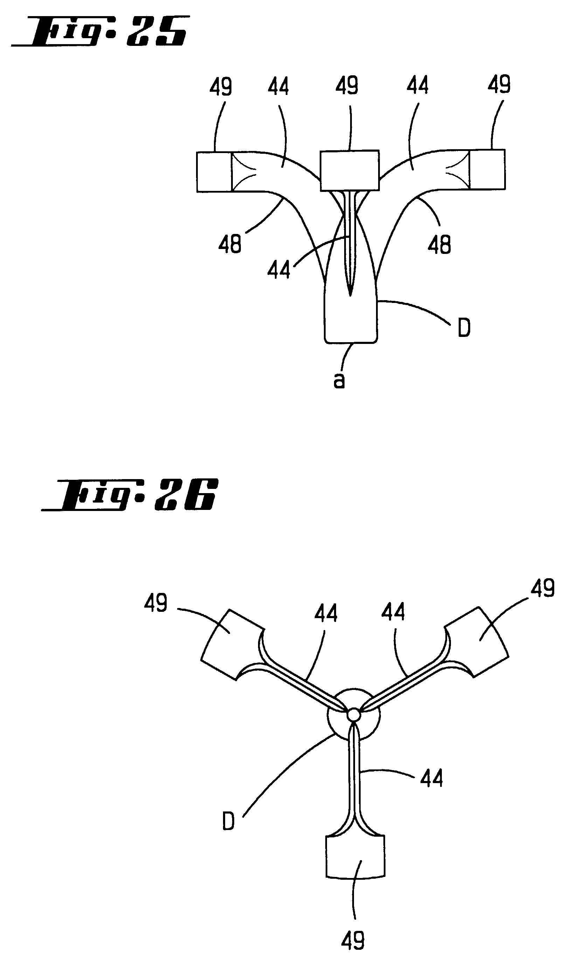

Die freien Enden der Beine 44 gehen in deutliche Materialanhäufungen über, d.h. sie bilden je einen Hammerkopf 49. Dieser ist so geformt, daß er in der kreisrunden Ringnut 45, die in Figur 25 in strichpunktierter Linienart dargestellt ist, querschnittsausfüllend einliegt.

Übergehend zu Figur 30, welche das erwähnte Blechbiegeteil als Dorn D verkörpert, liegt ein etwas anderer Aufbau vor. An die Stelle des massiven Kernes liegt ein hohler Kern mit einem knotenpunktartigen Zentrum vor, welches die exponierte Stoßflanke a formt, die in der erläuterten Weise mit der Stoßflanke c des Ventilkörpers V2 der anderen Kupplungshälfte II zusammenwirkt. Die entsprechende Stoßflanke a ist gemäß Variante Figur 24 der Boden des dortigen projektilförmigen Kernstückes.

Der unter erheblicher Materialersparnis erstellbare Dorn D gemäß Figur 30 hat vier Beine 44. Diese sind nicht, wenn auch gut verteilt, nicht mehr streng radial ausgebildet und besitzen, in Draufsicht gesehen, eine im wesentlichen H-förmige Struktur. Die freien Enden dieser Beine 44 gehen aber in in Umfangsrichtung der Innenwand der Höhlung 2 verlaufende abgebogene Abschnitte 50 über, die federnd in den Querschnitt der Ringnut 45 einschnäppern oder einrasten und bezüglich der paarigen Anordnung so abgewinkelt bzw. umgebogen sind, daß abstützungsmäßig im wesentlichen auch eine gleichwinklige Verteilung der Verankerungszonen dieses Dornes gegeben ist.

Wie ersichtlich, liegt bei diesem Dorn D neben der Biegeverformung nur ein ganz geringer Tiefziehanteil im Bereich des die Stoßflanke a bildenden Zentrums vor. Die Gabelung der Beine 44 geht von unterschiedlich tiefen Einschnitten aus, wobei in der Ebene des parallelen Beinverlaufs ein tieferer Gabeleinschnitt 51 realisiert ist als quer dazu. Der Gabeleinschnitt 51 reicht nahezu bis zum innenseitigen Vertiefungsgrund des Biegeteils. Der quer dazu liegende Gabeleinschnitt 52 der Beinpaare geht nur etwa über die Hälfte der Gesamtlänge des Dornes D. Beide Gabeleinschnitte 51,52 verjüngen sich zum Zentrum hin und sind auf ihrem Grund konkav ausgerundet. Die Innenkanten divergieren zunehmend zu den freien Enden hin. Auch hier liegt die oben erläuterten Bogengestalt vor (Bogen 48).

Die freien Enden der Abschnitte 50 können einwärts gebogen sein, so daß unter etwaiger Drehung des Dornes D in der Ringnut 45 keine hobelnde Wirkung auf dem Grund der Ringnut 45 auftritt.

Der Ringnut 45 ist eine Dichtung 40 vorgeschaltet. Wie beim zweiten Ausführungsbeispiel wirkt diese Dichtung 40 zwischen Höhlung 2 und Mantelfläche des Stecknippels 1 und liegt - axial gestaffelt - in einer Ringnut zwischen der Ebene der Kugeln 8 und der an tiefster Stelle angeordneten Ringnut 45.

## Patentansprüche

1. Schnellverschlußkupplung, bestehend aus zwei in dichtenden Sitz zueinander bringbaren Kupplungshälften (I,II), welche je einen gegen eine Sitzfläche (15,19) des Kupplungsgehäuses (3,16) federbelasteten Ventilkörper (V1,V2) aufweisen, die von einer an der jeweils anderen Kupplungshälfte (I,II) ortsfest angeordneten Stoßflanke (a,b) in die Ventil-Öffnungsstellung verlagerbar sind, wobei eine Stoßflanke (a) zurückversetzt in der einen Kupplungshälfte (I) angeordnet ist, dadurch gekennzeichnet, daß die rückversetzte Stoßflanke (a) von einem zentralen, mediumumspülten Dorn (D) gebildet ist, der in die andere Kupplungshälfte (II) einfährt, wobei beide Ventilkörper (V1,V2) zurückversetzt in den Kupplungshälften (I,II) angeordnet sind.

2. Schnellverschlußkupplung nach Anspruch 1, dadurch gekennzeichnet, daß Medium-Durchströmöffnungen (41) des Dornes (D) Durchtrittsquerschnitte formen zur Steuerung des federbelasteten Ventilkörpers (V1) der mit dem Dorn (D) bestückten Kupplungshälfte (I) mittels der vom freien Ende eines Stecknippels (1) gebildeten Stoßflanke (b).

3. Schnellverschlußkupplung nach Anspruch 2, dadurch gekennzeichnet, daß der mediummumspülte Dorn (D) an einer mediumdurchspülten Büchse (23) sitzt, die an ihrem dem Dorn (D) gegenüberliegenden Ende die Sitzfläche (15) des Ventilkörpers (V1) der einen Kupplungshälfte (I) bildet.

4. Schnellverschlußkupplung nach Anspruch 3, dadurch gekennzeichnet, daß die Büchse (23) ein Schiebeglied (SG) trägt, welches, von der Stoßflanke (b) des Stecknippels (1) verlagert, den Ventilkörper (V1) in die Öffnungsstellung steuert.

5. Schnellverschlußkupplung nach Anspruch 4, dadurch gekennzeichnet, daß das Schiebeglied (SG) von einer die Büchse (23) umfassenden Hülse (32) gebildet ist.

6. Schnellverschlußkupplung nach Anspruch 5, dadurch gekennzeichnet, daß die Büchse (23) mantelwandseitige Schlitze (33) trägt, in welchen sich Stoßfinger (34) der Hülse (32) führen.

7. Schnellverschlußkupplung nach Anspruch 6, dadurch gekennzeichnet, daß die Hülse (32) in Richtung ihrer Grundstellung federbelastet ist.

8. Schnellverschlußkupplung nach den Ansprüchen 5 und 6, dadurch gekennzeichnet, daß die Hülse (32) Verriegelungskugeln (7) einer Verriegelungseinrichtung (4) abstützt und denselben Außendurchmesser hat wie der Stecknippel (1).

9. Schnellverschlußkupplung nach Anspruch 1, dadurch gekennzeichnet, daß die Ventilkörper (V1,V2) mit einem vor der Ventilsitzfläche (15 bzw. 19 ) angeordneten mediumdurchströmten Führungsring (37) ausgestattet sind.

10. Schnellverschlußkupplung nach den Ansprüchen 6 und 9, dadurch gekennzeichnet, daß die Stoßfinger (34) gegen den Stirnrand des einen Führungsringes (37) treten.

11. Schnellverschlußkupplung nach Anspruch 1, dadurch gekennzeichnet, daß der Dorn (D) im Querschnitt sternförmig gestaltet ist und sich zum freien Ende hin verjüngt.

12. Schnellverschlußkupplung nach Anspruch 6, dadurch gekennzeichnet, da die Büchse (23) das Stützlager einer die Hülse (32) in Grundstellung belastenden Druckfeder (31) bildet.

13. Schnellverschlußkupplung nach Anspruch 1, dadurch gekennzeichnet, daß der Dorn (D) vom Frontbereich (43) eines mehrbeinigen Einsatzstückes der Kupplungshälfte (I) gebildet ist und die Enden der Beine (44) in Vertiefungen an der Innenwand einer zentralen Höhlung (2) des Kupplungsgehäuses (3) einsitzen.

14. Schnellverschlußkupplung nach Anspruch 13, dadurch gekennzeichnet, daß die Vertiefungen von einer Ringnut (45) gebildet sind.

15. Schnellverschlußkupplung nach Anspruch 13, dadurch gekennzeichnet, daß die freien Enden der Beine (44) in die Vertiefung eingebogen sind.

16. Schnellverschlußkupplung nach Anspruch 13, dadurch gekennzeichnet, daß die freien Enden der Beine (44) in die Vertiefung eingefedert sind.

17. Schnellverschlußkupplung nach Anspruch 13, dadurch gekennzeichnet, daß die Beine (44) in Strömungsrichtung liegende Flügelprofile besitzen.

18. Schnellverschlußkupplung nach Anspruch 15, dadurch gekennzeichnet, daß die Beine (44), ausgehend von einem projektilförmigen Kernstück, viertelkreisförmig gebogen verlaufen.

19. Schnellverschlußkupplung nach den Ansprüchen 13 bis 18, dadurch gekennzeichnet, daß die freien Enden der Beine (44) hammerkopfartig gestaltet sind.

20. Schnellverschlußkupplung nach den Ansprüchen 13 bis 19, dadurch gekennzeichnet, daß das mehrbeinige Einsatzstück (Dorn D) als Blechbiegeteil ausgebildet ist.

21. Schnellverschlußkupplung nach Anspruch 20, dadurch gekennzeichnet, daß der Grundzuschnitt ein Doppel-T-Stanzling ist, dessen T-Schenkel die Beine (44) bilden und der U-förmig gefaltete Steg das projektilförmige Kerntück des Dornes (D) bildet.

22. Schnellverschlußkupplung nach Anspruch 21, dadurch gekennzeichnet, daß die freien Enden der Beine (44) des Blechbiegeteils (Dorn D) aus in Umfangsrichtung der Innenwand der Höhlung (2) des Kupplungsgehäuses (3) abgebogenen Abschnitten (50) gebildet sind.

## Claims

1. Snap-lock coupling, consisting of two coupling halves (I, II) which can be fitted together sealingly and which each comprise a valve body (V1, V2) spring-biased against a seat surface (15, 19) of the coupling housing (3, 16), which can be displaced into the valve open position by an impact flank (a, b) arranged stationarily on the other coupling half (I, II), wherein one impact flank (a) is set back in one coupling half (I), characterised in that the setback impact flank (a) is formed by a central mandrel (D) around which medium flows and which enters the other coupling half (II), wherein both valve bodies (V1, V2) are set back in the coupling halves (I, II).

2. Snap-lock coupling according to claim 1, characterised in that medium throughflow openings (41) of the mandrel (D) form through-passages for control of the spring-biased valve body (V1) of the coupling half (I) fitted with the mandrel (D) by means of the impact flank (b) formed by the free end of a nipple (1).

3. Snap-lock coupling according to claim 2, characterised in that the mandrel (D) around which medium flows is seated on a bush (23) through which medium flows and which at its end opposite the mandrel (D) forms the seat surface (15) of the valve body (V1) of one coupling half (I).

4. Snap-lock coupling according to claim 3, characterised in that the bush (23) carries a sliding member (SG) which, displaced by the impact flank (b) of the nipple (1), moves the valve body (V1) into the open position.

5. Snap-lock coupling according to claim 4, characterised in that the sliding member (SG) is formed by a sleeve (32) encompassing the bush (23).

6. Snap-lock coupling according to claim 5, characterised in that the bush (23) carries slots (33) in the peripheral wall, in which are guided impact fingers (34) of the sleeve (32).

7. Snap-lock coupling according to claim 6, characterised in that the sleeve (32) is spring-biased in the direction of its normal position.

8. Snap-lock coupling according to claims 5 and 6, characterised in that the sleeve (32) supports locking balls (7) of a locking device (4) and has the same outside diameter as the nipple (1).

9. Snap-lock coupling according to claim 1, characterised in that the valve bodies (V1, V2) are fitted with a guide ring (37) which is arranged in front of the valve seat surface (15 or 19) and through which medium flows.

10. Snap-lock coupling according to claims 6 and 9, characterised in that the impact fingers (34) move against the end edge of one guide ring (37).

11. Snap-lock coupling according to claim 1, characterised in that the mandrel (D) is star-shaped in cross-section and tapers towards the free end.

12. Snap-lock coupling according to claim 6, characterised in that the bush (23) forms the support bearing of a compression spring (31) which biases the sleeve (32) into the normal position.

13. Snap-lock coupling according to claim 1, characterised in that the mandrel (D) is formed by the front region (43) of a multiple-leg insert piece of the coupling half (I) and the ends of the legs (44) are seated in recesses in the inner wall of a central cavity (2) of the coupling housing (3).

14. Snap-lock coupling according to claim 13, characterised in that the recesses are formed by an annular groove (45).

15. Snap-lock coupling according to claim 13, characterised in that the free ends of the legs (44) are bent into the recess.

16. Snap-lock coupling according to claim 13, characterised in that the free ends of the legs (44) are spring-deflected into the recess.

17. Snap-lock coupling according to claim 13, characterised in that the legs (44) have wing profiles located in the direction of flow.

18. Snap-lock coupling according to claim 15, characterised in that the legs (44), starting from a projectile-shaped core piece, are bent to a quarter circle shape.

19. Snap-lock coupling according to claims 13 to 18, characterised in that the free ends of the legs (44) are hammer head-shaped.

20. Snap-lock coupling according to claims 13 to 19, characterised in that the multiple-leg insert piece (mandrel D) is constructed as a bent sheet metal part.

21. Snap-lock coupling according to claim 20, characterised in that the basic blank is a stamped double-T part of which the T-bars form the legs (44) and the web folded to a U-shape forms the projectile-shaped core piece of the mandrel (D).

22. Snap-lock coupling according to claim 21, characterised in that the free ends of the legs (44) of the bent sheet metal part (mandrel D) are formed from sections (50) bent in the circumferential direction of the inner wall of the cavity (2) of the coupling housing (3).

## Revendications

1. Raccord à fermeture rapide constitué de deux demi-raccords (I-II) pouvant être placés l'un par rapport à l'autre en un siège d'étanchéité, demi-raccords présentant chacun un corps de clapet (V1, V2) sollicité élastiquement contre une surface de portée (15, 19) du boîtier de raccord (3, 16), corps de clapet déplaçable depuis un flanc de butée (a, b) disposé de façon localement fixe sur le deuxième demi-raccord (I, II) respectif, à la position d'ouverture de clapet, un flanc de butée (a) étant placé en retrait dans l'un des demi-raccords (I), caractérisé en ce que le flanc de butée (a) placé en retrait est constitué par un mandrin (D) central, contourné par l'écoulement d'un milieu, pénétrant dans l'autre demi-raccord (II), les deux corps de clapet (V1, V2) étant disposés en retrait dans les demi-raccords (I, II).

2. Raccord à fermeture rapide selon la revendication 1, caractérisé en ce que les ouvertures (41) contournées par l'écoulement d'un milieu, appartenant au mandrin (D) forment des sections transversales de passage destinées à la commande du corps de clapet (V1) sollicité élastiquement du demi-raccord (I) équipé du mandrin (D), au moyen des flancs de butée (b) constitués par l'extrémité libre d'un manchon d'enfichage (1).

3. Raccord à fermeture rapide selon la revendication 2, caractérisé en ce que le mandrin (D) contourné par l'écoulement d'un fluide siège sur une douille (23) traversée par l'écoulent d'un fluide, constituant sur son extrémité opposée au mandrin (D) la surface de portée (15) du corps de clapet (V1) du premier demi-raccord (I).

4. Raccord à fermeture rapide selon la revendication 3. caractérisé en ce que la douille (23) porte un organe coulissant (SG), qui commande, en étant déplacé par le flanc de butée (b) du manchon à enfichage (1), le passage du corps de clapet (V1) à la position d'ouverture.

5. Raccord à fermeture rapide selon la revendication 4. caractérisé en ce que l'organe coulissant (SG) est constitué d'un tube (32) entourant la douille (23).

6. Raccord à fermeture rapide selon la revendication 5. caractérisé en ce que la douille (23) porte du côté de la paroi d'enveloppe des fentes (33) dans lesquelles sont guidées des doigts de battage (34) du tube (32).

7. Raccord à fermeture rapide selon la revendication 6. caractérisé en ce que le tube (32) est sollicité élastiquement dans la direction de sa position de base.

8. Raccord à fermeture rapide selon les revendications 5 et 6. caractérisé en ce que le tube (32) sert à l'appui de billes de verrouillage (7) d'un dispositif de verrouillage (4) et a le même diamètre extérieur que le manchon à enfichage (1).

9. Raccord à fermeture rapide selon la revendication 1, caractérisé en ce que les corps de clapet (V1, V2) sont équipés d'une bague de guidage (37) contournée par l'écoulement d'un milieu et disposée devant la surface de portée de clapet (15, respectivement 19).

10. Raccord à fermeture rapide selon les revendications 6 et 9, caractérisé en ce que les doigts de battage (34) se placent contre le bord frontal de l'une des premières bagues de guidage (37).

11. Raccord à fermeture rapide selon la revendication 1, caractérisé en ce que le mandrin (D) a une section transversale en étoile et va en s'effilant en direction de l'extrémité libre.

12. Raccord à fermeture rapide selon la revendication 6, caractérisé en ce que la douille (23) constitue le palier d'appui d'un ressort de compression (31) sollicitant le tube (32) en position de base.

13. Raccord à fermeture rapide selon la revendication 1, caractérisé en ce que le mandrin (D) est constitué par la zone frontale (43) d'une pièce d'insert à plusieurs pieds du demi-raccord (I) et les extrémités des pieds (44) venant siéger dans des cavités ménagées sur la paroi intérieure d'une cavité centrale (2) du boîtier de raccord (3).

14. Raccord à fermeture rapide selon la revendication 13, caractérisé en ce que les cavités sont constituées par une gorge annulaire (45).

15. Raccord à fermeture rapide selon la revendication 13, caractérisé en ce que les extrémités libres des pieds (44) sont coudées et pénètrent dans la cavité.

16. Raccord à fermeture rapide selon la revendication 13, caractérisé en ce que les extrémités libres des pieds (44) sont insérés dans la cavité en faisant jouer leur élasticité.

17. Raccord à fermeture rapide selon la revendication 13, caractérisé en ce que les pieds (44) ont des profils en ailettes orientés dans la direction de l'écoulement.

18. Raccord à fermeture rapide selon la revendication 15, caractérisé en ce que les pieds (44) courent suivant des arcs formant un quart de cercle, en partant d'une pièce de noyau à forme de projectile.

19. Raccord à fermeture rapide selon l'une des revendications 13 à 18, caractérisé en ce que les extrémités libres des pieds (44) ont la forme d'une tête de marteau.

20. Raccord à fermeture rapide selon les revendication 13 à 19, caractérisé en ce que une pièce d'insert à plusieurs pieds (mandrin D) est réalisée sous forme de pièce en tôle pliable.

21. Raccord à fermeture rapide selon la revendication 20, caractérisé en ce que le flanc de base est une ébauche en forme de double T, dont les branches de T constituent les pieds (44) et l'âme pliée en U constitue la pièce de noyau en forme de projectile du mandrin (D).

22. Raccord à fermeture rapide selon la revendication 21, caractérisé en ce que les extrémités libres des pieds (44) de la pièce en tôle pliable (mandrin D) sont constituées de sections (50) pliées dans la direction périphérique de la paroi intérieure de la cavité (2) du boîtier de raccord (3).
